# EUROPEAN PATENT APPLICATION

(11) **EP 2 746 711 A1**
(43) Date of publication of application: **25.06.2014**
(21) Application number: 12461568.3
(22) Date of filing: 21.12.2012
(51) Int. Cl.: F28F 19/02

(54) **Heat exchanger core plate, heat exchanger provided with such plate and manufacturing process of such heat exchanger**

(71) Applicant: VALEO AUTOSYSTEMY Sp. Z. o.o., 32-050 Skawina (PL)
(72) Inventor: Stramecki, Tomasz, 32 640 Zator (PL); Wiktor, Tomasz, 30 150 Kraków (PL)
(74) Representative: Slominska-Dziubek, Anna

(57) **Abstract**

The invention relates to a heat exchange core plate, said core being configured to exchange heat between a first and a second fluid, said plate (4) presenting a first and a second face, said first face (100) being defined by an anti-corrosive material layer (104), intended to be coated by an reacting flux (106), said second face (102) being defined by a brazing material layer (108) in order to be brazed with another plate of the core (2) to form a flow channel for the second fluid.

The invention also relates to a heat exchanger comprising such plate and to a manufacturing process of such a heat exchanger.

## Description

The invention relates to a heat exchanger core plate and a heat exchanger comprising such plate. It also relates to a manufacturing process of such a heat exchanger. The invention especially relates to heat exchangers for motor vehicles.

In this field, heat exchangers called charge air coolers are known. They ensure a heat transfer between admission gases of the engine vehicle motor and a coolant. In some architecture, the admission gases sent to the engine comprise not only charge air but also gases coming from the exhaust of the engine also called EGR for "exhaust gases recirculated".

When such gases flow inside the heat exchanger they raise many difficulties, especially due to the aggressive properties of their components when they condense under the action of the cooler.

Various kinds of charge air coolers have been already proposed. It is thus known charge air coolers, called water cooled charge air coolers, including a heat exchange core allowing a heat transfer between admission gases and a cooling liquid. Such kind of heat exchanger is of the interest to be laid out freely under the hood, especially near the vehicle engine, contrary to the air cooled charge coolers using an ambient air flow which require to be laid out on the front end of the vehicle or at the very least near an air inlet.

It is especially known water cooled charge air coolers comprising a brazed heat exchange core made of stacked plates. Said core defines there between alternated flow channels for the admission gases and the cooling liquid. In the case of admission gases including EGR, said plates must resist to said gases. They must in addition allow a reliable brazing of the core.

Many kinds of plates were already considered in this direction. They comprise various layers of aluminium alloy. They present however dispersions thickness due to the diversity of hardness of their various layers. Indeed, because of the process used to manufacture said plates, namely hot rolling, both the connection between the various layers of said plates and their thicknesses are difficult to control.

The present invention aims at improving the situation and proposes for this purpose a heat exchange core plate, said core being configured to exchange heat between a first and a second fluid, said plate presenting a first and a second face, said first face being defined by an anti-corrosive material layer, intended to be coated by an reacting flux (e.g. alloy flux), said second face being defined by a brazing material layer to be brazed with another plate of the core to form a flow channel for the second fluid.

The invention is based on the observation made by the applicant that the functions to be ensured firstly by each face of the plate are distinct. More precisely the face which is to be associated with another plate of the core must above all provide a brazing function whereas it is not the case for the opposite face which must first provide a function of protection against corrosion. It is thus not necessary that the latter also presents a brazing material layer, the use of a simple reacting flux (e.g. alloy flux) being sufficient to ensure brazing.

Therefore the difficulties encountered with the plates including too many layers are solved, especially the difficulties due to the disparities of hardness among the various layers.

According to some modes of realization of the invention, which could be taken together or separately:
- said plate is intended to be brazed, by the intermediary of said reacting flux (e.g. alloy flux), with turbulators through which the first fluid flows,
- said plate includes a layer of material forming a core layer,
- said core layer is located between said brazing material layer and said anti-corrosive material layer,
- said plate is constituted of said anti-corrosive material layer, said core layer and said brazing material layer, said anti-corrosive material layer being intended to be or being covered by said reacting flux (e.g. alloy flux).

The invention also relates to a heat exchanger, especially for motor vehicles, including at least one plate as above described as well as an intake module, especially for a motor vehicle engine, including such a heat exchanger.

The invention also relates to a heat exchanger manufacturing process, said heat exchanger including a heat exchanger core being configured to exchange heat between a first and a second fluid, said core including stacked plates, at least one of said plates presenting a first face, brazed with turbulators through which the first fluid flows, and a second face, brazed with another plate of the core to form a flow channel for the second fluid, said second face being defined by a brazing material layer, said process including:
- a first step in which an anti-corrosive material layer of the plate is coated with an reacting flux (e.g. alloy flux), in order to define said first face,
- a second step in which said plates are stacked.

The plates used in said manufacturing process may especially be the plates as above described.

### Brief description of the drawings:

- Figure 1 is a perspective view illustrating a heat exchanger in separated parts;
- Figure 2 schematically illustrates, in cut view, the various layers of an embodiment of a plate according to the invention;
- Figure 3 schematically illustrates, in cut view, a plate and turbulators of another embodiment of a heat exchanger according to the invention.

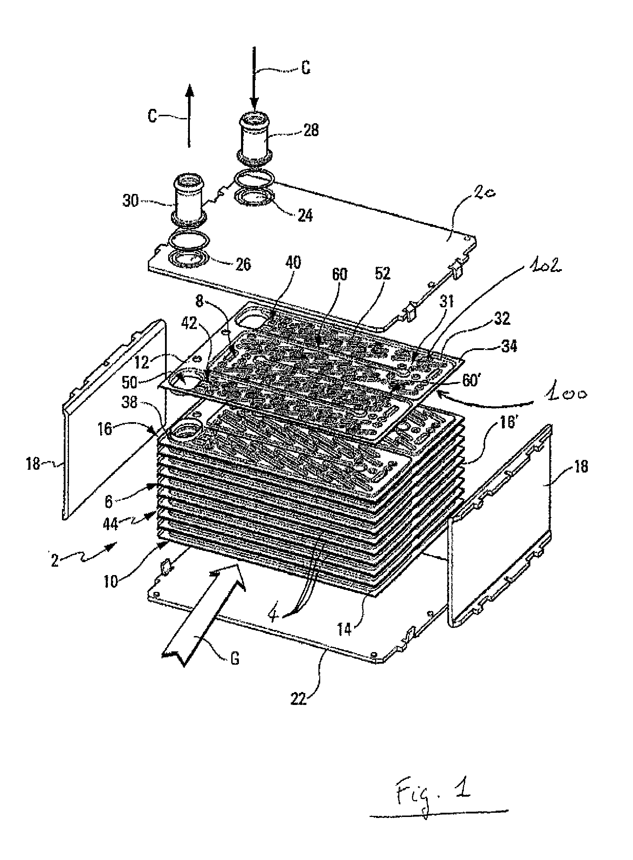

As illustrated on Figure 1, the invention relates to a heat exchanger including a heat exchange core 2, said core being configured to exchange heat between a first fluid, especially a fluid to be cooled G, and a second fluid, especially a cooling liquid C. It may be a water cooled charge air cooler which is to say a charge air cooler inside which a flow of charge air, intended to supply a thermal engine, for example a motor vehicle engine, is cooled by the cooling liquid, especially a mixture of water and glycol. The charge air may also comprise gases coming from the engine exhaust line, namely EGR.

Said heat exchange core 2 comprises stacked plates 4 defining there between alternating circuits 6, 8 for the fluid to be cooled and the cooling liquid. The core 2 is here of an overall parallelepiped shape and presents an inlet face 10 and an opposed outlet face for the first fluid. In the stacking direction, it is closed on both sides by a higher plate 12 and by a lower plate 14.

Said heat exchanger may also comprise a casing in which said core 2 is located. Said casing guides the fluid to be cooled between the plates 4, 12, 14 from the inlet face 10 to the outlet face of said core 2. It comprises here two side walls 18, each one coming into abutment with side edges 16, 16' of the plates 4, 12, 14, a higher wall 20, coming in contact with the higher plate 12 and a lower wall 22 coming in contact with the lower plate 14. The higher wall 20 may be provided with openings 24, 26 allowing the cooling liquid C to enter inside and exit outside said core 2. To the same aim, said heat exchanger may also comprise pipes 28, 30 in communication with said openings 24, 26 of said casing.

An inlet collecting box and an outlet collecting box (not shown) may be adapted to the inlet face 10 and the outlet face of said core 2 to bring and evacuate the first fluid. The outlet collecting box may be an air intake box of the vehicle engine, i.e., a collecting box configured to be attached to a cylinder head of said engine and to distribute admission gases towards the various admission pipes of said engine. The heat exchanger then defines an intake module.

The invention more particularly relates to plates 4, 12, 14 of said core 2. Said plates 4, 12, 14 present a first face 100 and one second face 102. Said plates 4, 12, 14 of the core may be all identical. We describe below one example of shape of said plates 4, 12, 14 in connection with Figure 1. Other shapes are of course possible without departing from the scope of the invention.

Each plate 4, 12, 14 comprises, for example, a roughly plane bottom 31, surrounded by a peripheral edge 32 finished by a flat part 34, adapted for the brazing of the plates between them. Said circuit 8 for the second fluid is defined, on the one hand, by said peripheral edge 32 and here, on the other hand, by one or several edges 60, 60', for example coming from the bottom 31 of the plate.

The plates 4, 12, 14 are grouped by pairs and assembled by their flat parts 34 and/or their edges 60, 60' through their second faces 102 which are facing each other. In this way, the circuits 8 of a higher plate and a lower plate of the same pair of plates 4 commonly constitute the flow channel for the cooling liquid C. In other words, plates 4 are stacked by pair so that said cooling liquid circuit 8 of one of the two plates of a pair is facing the cooling liquid circuit 8 of the other plate of the same pair in order to form said flow channel for the cooling liquid.

Said circuits 6 for the first fluid are defined between two plates 4 of two adjacent pairs of plates, said two plates 4 facing each other. The exchanger may comprise turbulators, not shown on this drawing, through which the first fluid flows. Said turbulators are brazed with plates 4 on their first face 100. These turbulators may be corrugated fins. They form secondary heat-transfer surfaces making the first fluid flow turbulent so as to improve heat exchange between the first and second fluids. They also define separators between the plates and/or reinforce the mechanical resistance of the heat exchanger.

In the illustrated example, the higher plate 12 and the lower plate 14 are assembled with the higher wall 20 and the lower wall 22 of the casing to define a flow channel for the second fluid.

Said plates 4, 12, 14 have, for example, the general shape of a rectangle having two large sides and two small sides, each plate comprising two embossed parts 38, a first embossed part 38 comprising an inlet 40 for the second fluid flow channel 8 and the other embossed part 38 comprising an outlet 42 for said second fluid flow channel 8.

Said embossed parts 38 are here located along the same small side of said plates 4, 12, 14. They comprise an opening 50 which let the second fluid flow and are adapted to come in contact with the embossed parts 38 of an adjacent plate 4 to respectively form an inlet collector and an outlet collector 44 for the second fluid. Said inlet collector communicates with the inlet pipe 28 by the inlet opening 24 located in the casing and/or the outlet collector 44 communicates with the outlet pipe 30 by the outlet opening 26 located in the casing.

In other words, the coolant enters the core by the inlet pipe 28. It is then distributed between said plates 4 in said coolant flow channels by the inlet collector. It flows in said coolant flow circuits 8 from their inlet 40 to their outlet 42 where it enters the outlet collector 44. It then leaves the heat exchanger by the outlet pipe 30.

Said embossed parts 38 of two pairs of plates 4 may define there between the heights of first fluid circuits 6.

Each plate 4, 12, 14 here comprises corrugations 52 laid out in said circuits 8 for the second fluid. These corrugations 52 extend between said embossed parts 38 along the fluid flow channel. Corrugations 52 may come from the bottom 31 of the plates 4, 12, 14.

Said circuit 8 may be configured to guide the second fluid in successive passes, here four, in which the second fluid flows between said circuit inlet 40 and said circuit outlet 42. Two adjacent passes are separated, for example, by said plates edges 60, 60'.

The passes are parallel one from the other according to a direction of extension, here the large side of the plates. From a flow perspective, they may be in series. Said edges 60, 60' are thus directed along the large side of said plates 4 to define a circulation in serpentine of the second fluid in said circuit 8. First fluid flow in circuits 6 is thus carried out in a direction which is globally perpendicular to that of the second fluid in said passes, said second fluid making a U turn from one pass to the other.

The various parts of the heat exchanger, especially said plates 4, 12, 14, said casing, said turbulators and/or said pipes are made, for example, out aluminium or aluminium alloy, said aluminium of aluminium alloy parts being brazed to each other.

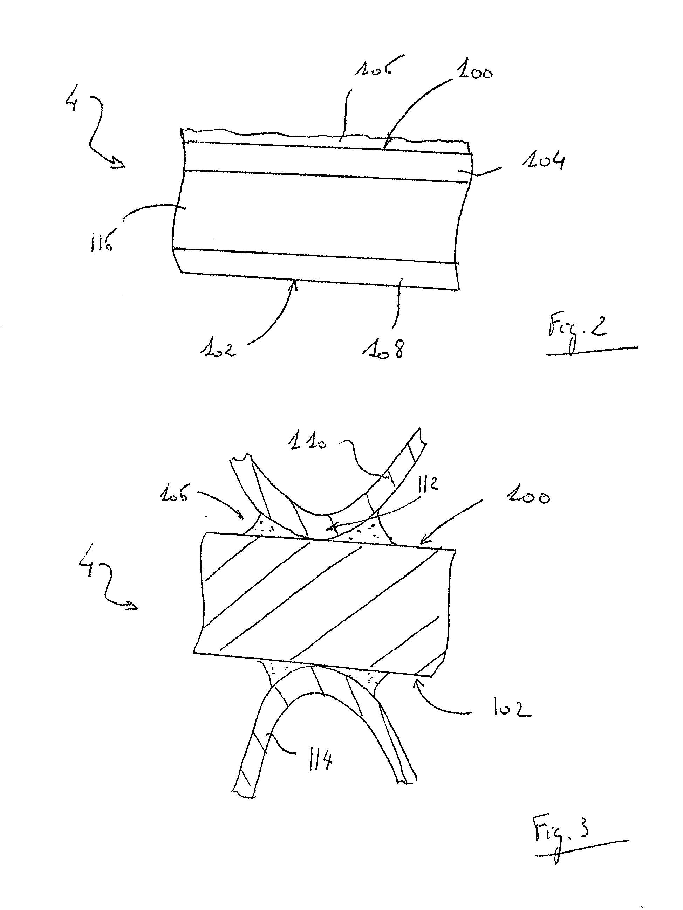

According to the invention, as illustrated on Figure 2, said first face 100 is defined by an anti-corrosive material layer 104, intended to be covered by an reacting flux (e.g. alloy flux) 106. Said second face 102 is defined by a brazing material layer 108 in order to be brazed with another plate of the core to form a flow channel for the second fluid.

As a result the invention provides a plate 4, 12, 14 in which each face is adapted to the main function to fulfil, namely corrosion resistance on first side 100 and brazing on second side 102.

Said core layer 116 is located here between the brazing material layer 108 and said anti-corrosive material layer 104. In other words, the plate 4 consists of only three layers of material 104, 108, 116, said anti-corrosive material layer 104 being covered by said reacting flux (e.g. alloy flux) 106 before brazing.

As illustrated on Figure 3, after brazing, said plate 4 is in contact, by the intermediary of said reacting flux (e.g. alloy flux) 106, with the turbulators 110 through which the first fluid flows. Said turbulators 110 and said plate first face 100 are brazed to each other through tops 112 of turbulators folds thanks to brazing joints formed by the reacting flux (e.g. alloy flux).

According to the illustrated alternative, said corrugations 52 turbulating the second fluid flow and/or said edges 60, 60' being used to define the flow pass for the second fluid in the embodiment of drawing number 2 may be supplemented or replaced by another turbulator 114, located on the side of the second face 102 of the plate.

The invention also relates to a manufacturing process of a heat exchanger including a heat exchange core configured to exchange heat between a first and a second fluid. Said core includes stacked plates, at least one of said plates presenting a first face, brazed with turbulators through which the first fluid flows, and a second face, brazed with another plate of the core to form a flow channel for the second fluid, said second face being defined by a brazing material layer. It may be the plates as above described in relation with drawings 1 to 3.

According to the invention, said process comprises a first step in which an anti-corrosive material layer of the plate is coated with an reacting flux (e.g. alloy flux), in order to define said first face. It also comprises a second step in which said plates are stacked.

Before stacking, said plates 4, 12, 14 are thus coated by said reacting flux (e.g. alloy flux) 104, preferably, on all the surface of their first face 100. Said plates are obtained, for example, by hot rolling of a material foil, said foil being cut and pressed or stamped afterwards to define said plates.

During stacking the turbulators are put into place between said plates. The stacked plates and turbulators are then brazed to define the heat exchange core, especially by using a brazing furnace, for example a brazing furnace functioning under controlled atmosphere. The other parts of the heat exchanger such as its casing and/or its pipes may be brazed simultaneously.

As already said, brazing joints are thus obtained between the plate and the tops of the turbulators through which the first fluid circulates, via said reacting flux (e.g. alloy flux). Brazing joints are also obtained between the facing surfaces of the plates of a same pair of plates, like between said plates and the tops of the turbulators which may be used between the two plates of a same pair of plates, via said brazing material layer.

## Claims

1. Heat exchange core plate, said core (2) being configured to exchange heat between a first and a second fluid, said plate (4, 12, 14) presenting a first and a second face, said first face (100) being defined by an anti-corrosive material layer (104), intended to be coated by an reacting flux (106), said second face (102) being defined by a brazing material layer (108) in order to be brazed with another plate (4, 12, 14) of the core (2) to form a flow channel for the second fluid.

2. Plate according to claim 1, in which said anti-corrosive material layer (104) is coated by said reacting flux (106).

3. Plate according to any of claims 1 or 2 in which said plate (4, 12, 14) is intended to be brazed, by the intermediary of said reacting flux, with turbulators (110) through which the first fluid flows.

4. Plate according to any of the preceding claims including a layer of material forming a core layer (116).

5. Plate according to claim 4 in which the core layer (116) is located between said brazing material layer (108) and said anti-corrosive material layer (104).

6. Plate according to claim 5 constituted of said anti-corrosive material layer (104), said core layer (116) and said brazing material layer (108), said anti-corrosive material layer being (104) intended to be or being covered by said reacting flux (106).

7. Heat exchanger, especially for motor vehicles, including at least one plate (4, 12, 14) according to any of the preceding claims.

8. Intake module, especially for a motor vehicle engine, including a heat exchanger according to claim 7.

9. Heat exchanger manufacturing process, said heat exchanger including a heat exchanger core (2) being configured to exchange heat between a first and a second fluid, said core including stacked plates (4, 12.14), at least one of said plates presenting a first face (100), brazed with turbulators (110) through which the first fluid flows, and a second face (102), brazed with another plate (4, 12, 14) of the core (2) to form a flow channel for the second fluid, said second face (102) being defined by a brazing material layer (108), said process including:
- a first step in which an anti-corrosive material layer (104) of the plate (4, 12, 14) is coated with an reacting flux (106), in order to define said first face (100),
- a second step in which said plates (4, 12, 14) are stacked.
